(19) Europäisches Patentamt
European Patent Office
Office européen des brevets

(11) **EP 3 505 817 B1**

(12) **EUROPEAN PATENT SPECIFICATION**

(45) Date of publication and mention
of the grant of the patent:
**24.03.2021  Bulletin 2021/12**

(21) Application number: **18248296.8**

(22) Date of filing: **28.12.2018**

(51) Int Cl.:
*F21S 41/64* (2018.01)     *G02F 1/1343* (2006.01)

(54) **LIQUID CRYSTAL ELEMENT FOR DIMMING A VEHICLE HEADLIGHT**

FLÜSSIGKRISTALLELEMENT ZUM ABSCHWÄCHEN DES FERNLICHTS EINES FAHRZEUGS

ÉLÉMENT À CRISTAUX LIQUIDES POUR ATTENUER L'INTENSITÉ DES PHARES D'UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **28.12.2017   JP 2017253741**

(43) Date of publication of application:
**03.07.2019   Bulletin 2019/27**

(73) Proprietor: **STANLEY ELECTRIC CO., LTD.**
**Tokyo 153-8636 (JP)**

(72) Inventors:
• **TOKO, Yasuo**
**Tokyo, 153-8636 (JP)**
• **MANO, Tomohide**
**Tokyo, 153-8636 (JP)**
• **KATO, Keisuke**
**Tokyo, 153-8636 (JP)**

(74) Representative: **Carstens, Dirk Wilhelm**
**Wagner & Geyer Partnerschaft mbB**
**Patent- und Rechtsanwälte**
**Gewürzmühlstraße 5**
**80538 München (DE)**

(56) References cited:
**JP-A- 2005 183 327     US-A1- 2004 100 676
US-A1- 2015 252 974**

**Description**

BACKGROUND OF THE INVENTION

Field of the Invention

The present invention relates to a lighting apparatus for performing light irradiation in a desired pattern in front of an own vehicle for example, and a liquid crystal element suitable for use in the apparatus and the system.

Description of the Background Art

JP 2005-183327 A discloses a vehicular lamp comprising a light emitting part 11 including at least one LED 11a and a light shielding part 12 where a part of the light irradiated forward from the light emitting part is shielded forming a cutoff line suited for a light distribution pattern of the vehicular lamp. The light shielding part 12 consists of an electro-optical element having a dimming function and a control part 14 which performs light dimming control of the electro-optical element. The control part selectively performs a light dimming control by electrically switching the electro-optical element, thereby changing the shape of the light distribution pattern. A liquid crystal element is used as the electro-optical element, for example.

In the vehicular lamp as described above, the electro-optical element such as a liquid crystal element or the like is configured to have a plurality of pixel electrodes in order to achieve selective dimming. These pixel electrodes are separated from one another so as to be able to apply voltages individually, and a gap is provided between each of the pixel electrodes for electrical insulation. Here, the gap between the pixel electrodes is approximately $10\mu$m although it varies depending on the required forming precision. Further, in the case where three or more rows of pixel electrodes are provided, since it is necessary to extend a wiring part between the pixel electrodes for applying voltage to each pixel electrode in the middle row, the gap between the pixel electrodes eventually becomes larger. The gap between the pixel electrodes is a portion that does not contribute to the image formation and becomes a factor for generating a dark line in the light distribution pattern. In a vehicular lamp, since the image formed by the electro-optical element (the image corresponding to the light distribution pattern) is enlarged by the lens or the like and projected to the front of the own vehicle, the dark line as described above is also enlarged causing it to become conspicuous, thereby resulting in poor appearance in the light distribution pattern which is a disadvantage.

To overcome this disadvantage, narrowing the gap between the pixel electrodes may be considered. However, this option is not preferable because this would increase manufacturing cost and is likely to cause troubles such as a short circuit between the pixel electrodes. Further, to overcome this disadvantage, thinning the wiring part extended between the pixel electrodes may be considered. However, this option is not preferable because the increase in the resistance of the wiring part makes it difficult to apply necessary and sufficient voltage to the pixel electrode and disconnection occurrence probability increases due to the thinning of the wiring part. Here, such disadvantages are not limited to a vehicle lamp and is likely to occur in a lighting apparatus in general that controls light distribution patterns using a liquid crystal element or the like.

US 2015/252974 A1 was used as a basis for the preamble of claim 1 and discloses techniques related to generating daylight-like light from green laser and magenta phosphor. Such light may be used in headlights of vehicles. The daylight-like light generated from green laser and filtered through magenta phosphor is almost white or substantially white. The white laser is generated from green laser that is filtered through magenta phosphor. The green laser is well known for producing the highest perceived intensity among all colored lasers with equal or similarly provided energy and is low to obtain in cost.

US 2004/100676 A1 discloses an electrically controllable device with variable optical and/or energy properties, comprising at least one carrier substrate provided with a functional stack of layers comprising at least two active layers separated by an electrolyte. The stack is placed between a lower electrode and an upper electrode. The device comprises n regions which are independently electrically controllable, using: the tower electrode having a pattern A in one or two dimensions, the stack of layers, at least one of the active layers and the electrolyte of which having a pattern B in two dimensions, in particular obtained by etching, the upper electrode having a pattern C in two dimensions, so that the superposition of the patterns A, B and C, defines said n regions, with a physical discontinuity between two adjacent regions at least both at the level of the upper electrode and at the level of one of the active layers and of the electrolyte.

In a specific aspect, it is an object of the present invention to provide a technique capable of improving the appearance of a light distribution pattern in a lighting apparatus that controls the light distribution pattern using liquid crystal elements or the like.

## SUMMARY OF THE INVENTION

According to an aspect of the present invention, a liquid crystal element is provided as set forth in claim 1.

According to another aspect of the present invention, a lighting apparatus is provided as set forth in claim 7.

Preferred embodiments of the present invention may be gathered from the dependent claims.

According to each of the configurations described above, it is possible to improve the appearance of a light distribution pattern in a lighting apparatus that controls the light distribution pattern using liquid crystal elements or the like.

## BRIEF DESCRIPTION OF THE DRAWINGS

FIG.1 is a diagram showing the configuration of a vehicular lamp system according to one embodiment.

FIGS.2A and 2B are schematic cross-sectional views showing the configuration of the liquid crystal element.

FIG.3 is a schematic plan view showing the configuration of the liquid crystal element.

FIG.4 is a diagram for explaining the relationship between the shape of the connecting part of each pixel electrode and the direction of alignment treatment.

FIGS.5A to 5C are diagrams for explaining the relationship between each connecting part and the direction of alignment treatment.

FIG.6 is a graph showing the transmittance characteristics of each sample of the liquid crystal element.

FIGS.7A and 7B are diagrams showing changes in chromaticity of element a and element d, respectively.

FIG.8 is a plan view for explaining a modification example of the common electrode.

FIG.9 is a plan view for explaining a modified embodiment of the pixel electrodes and the inter-pixel electrodes.

FIG.10 is a plan view for explaining a modified embodiment of the pixel electrodes.

## DESCRIPTION OF THE PREFERRED EMBODIMENTS

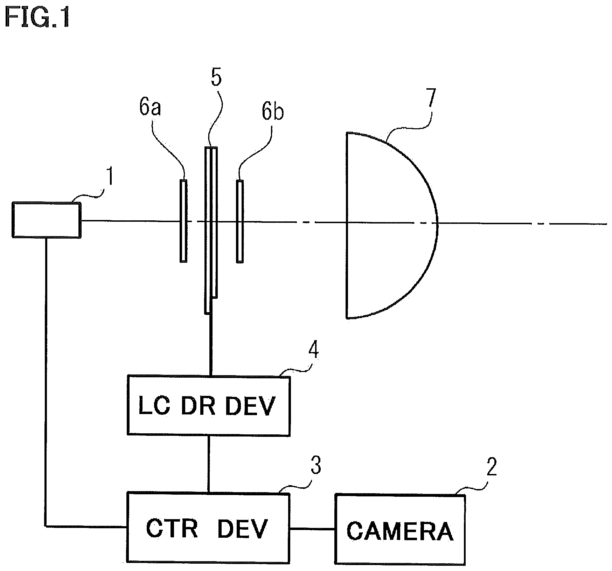

FIG. 1 is a diagram showing the configuration of a vehicular lamp system according to one embodiment. The vehicular lamp system shown in FIG.1 is configured to include a light source 1, a camera 2, a control device 3 (which is abbreviated as CTR DEV in FIG.1), a liquid crystal driving device 4 (which is abbreviated as LC DR DEV in FIG.1), a liquid crystal element 5, a pair of polarizers 6a and 6b, and a projection lens 7. The vehicular lamp system detects the position of a preceding vehicle or a pedestrian or the like existing around one's own vehicle based on the image captured by the camera 2, sets a predetermined region including the position of a preceding vehicle or the like as the non-irradiation region, and sets the remaining region as the light irradiation region and selectively irradiates light thereafter.

The light source 1 includes, for example, a white light LED configured by combining a yellow phosphor in a light emitting element (LED) that emits blue light. The light source 1 includes, for example, a plurality of white light LED arranged in a matrix or in a line. Here, instead of the above-stated LED, light source commonly used in a lamp unit for vehicles such as a laser, a light bulb or a discharge lamp can be used for the light source 1. The on/off state of the light source 1 is controlled by a control device 3. The light emitted from the light source 1 is made incident on the liquid crystal element 5 (the liquid crystal panel) via the polarizer 6a. Note that another optical system, for example, a lens, a reflecting mirror, or a combination thereof, may exist on the path from the light source 1 to the liquid crystal element 5.

The camera 2 is for photographing the front of its own vehicle and outputting its image (information), and is installed at a predetermined position (for example, the upper portion of the front windshield) inside the vehicle. Here, note that if the own vehicle is equipped with a camera for other purposes (for example, an automatic braking system or the like), the camera may be shared.

The control device 3 detects the position of the forward vehicle or the like by performing image processing based on the image obtained by the camera 2 photographing the front of the vehicle. The control device 3 then sets a light distribution pattern where the the position (area) of the detected forward vehicle or the like is defined as the non-irradiation range and the remaining area is defined as the irradiation range. The control device 3 then generates a control signal for forming an image corresponding to the light distribution pattern and supplies it to the liquid crystal driving device 4. The control device 3 carries out a predetermined operation program in a computer system comprising a CPU, ROM, RAM and the like, for example.

The liquid crystal driving device 4 supplies a driving voltage to the liquid crystal element 5 based on the control signal supplied from the control device 3, thereby individually controlling the alignment state of the liquid crystal layer in each pixel region of the liquid crystal element 5.

The liquid crystal element 5 has, for example, a plurality of individually controllable pixel regions (light modulating regions), and the transmittance of each pixel region is variably set according to the magnitude of the voltage applied to the liquid crystal layer provided by the liquid crystal driving device 4. By transmitting light from the light source 1 to the liquid crystal element 5, the image having brightness and darkness corresponding to the light irradiation range and the non-irradiation range described above is formed. For example, the liquid crystal element 5 is provided with a vertical alignment type liquid crystal layer and is disposed between the pair of polarizers 6a and 6b arranged in crossed Nicol arrangement. The liquid crystal element 5 is set in a state in which the light transmittance is extremely low (light shielding state) when the voltage to the liquid crystal layer is not applied (or a voltage is equal to or lower than a threshold value) and is set in a state in which the light transmittance is relatively high (transmission state) when the voltage is applied to the liquid crystal layer.

The polarizing axes of the pair of polarizers 6a and 6b are substantially orthogonal to each other, for example, and are arranged to face each other with the liquid crystal element 5 interposed therebetween. In this embodiment, the liquid crystal element is assumed to be set in a state where light is shielded (the light transmittance is extremely low) when no voltage is applied to the liquid crystal layer, which is so-called a normally black mode type liquid crystal element. For each of the polarizers 6a and 6b, an absorptive polarizer made of a general organic material (iodine type, dye type) can be used, for example. Further, if heat resistance is highly desired, it is also preferable to use a wire grid polarizer. A wire grid polarizer is a polarizer in which ultra thin lines (wires) made of metal such as aluminum are arranged in an array. Further, an absorptive polarizer and a wire grid polarizer may be stacked and used.

The projection lens 7 enlarges the image formed by the light transmitted through the liquid crystal element 5 (the image having light and dark portions each corresponding to the light irradiation range and the non-irradiation range) so as to provide light distribution suited for a headlight and projects the image forward of the own vehicle, and a suitably designed lens is used in the system to achieve its purpose. In this embodiment, a projector lens which forms an inverted image is used.

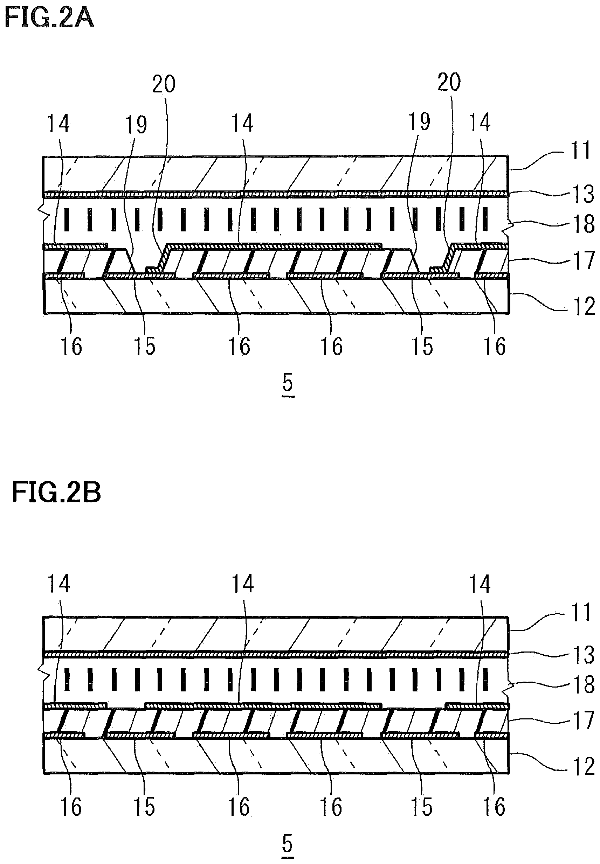

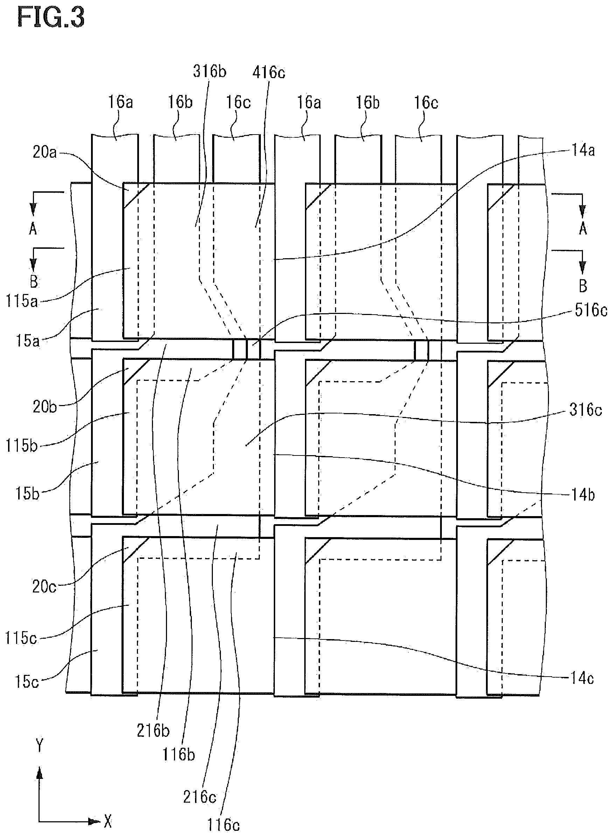

FIGS.2A and 2B are schematic cross-sectional views showing the configuration of the liquid crystal element. And FIG.3 is a schematic plan view showing the configuration of the liquid crystal element. Here, the cross sectional view shown in FIG.2A corresponds to the partial cross section taken along line A-A shown in FIG.3 and the cross sectional view shown in FIG.2B corresponds to the partial cross section taken along line B-B shown in FIG.3 The liquid crystal element 5 is configured to include an upper substrate (first substrate) 11 and a lower substrate (second substrate) 12 arranged to face each other, a common electrode (counter electrode) 13 provided on the upper substrate 11, a plurality of pixel electrodes 14 (14a, 14b, 14c) provided on the lower substrate 12, a plurality of inter-pixel electrodes 15 (15a, 15b, 15c), a plurality of wiring parts 16 (16a, 16b, 16C), an insulating layer 17, and a liquid crystal layer 18 disposed between the upper substrate 11 and the lower substrate 12. Here, although not shown for convenience of explanation, an alignment film for regulating the alignment of the liquid crystal layer 18 is suitably provided on the upper substrate 11 and the lower substrate 12, respectively.

Each of the upper substrate 11 and the lower substrate 12 is a rectangular substrate in a plan view and are arranged to face each other. As each substrate, for example, a transparent substrate such as a glass substrate, a plastic substrate or the like can be used. A plurality of spacers is dispersed uniformly and arranged between the upper substrate 11 and the lower substrate 12, for example, and as a result of these spacers, a predetermined gap (approximately a few $\mu$m, for example) is maintained between the two substrates.

The common electrode 13 is provided on one surface side of the upper substrate 11. The common electrode 13 is integrally provided so as to face each pixel electrode 14 of the lower substrate 12. The common electrode 13 is configured, for example, by suitably patterning a transparent conductive film made of indium tin oxide (ITO) or the like.

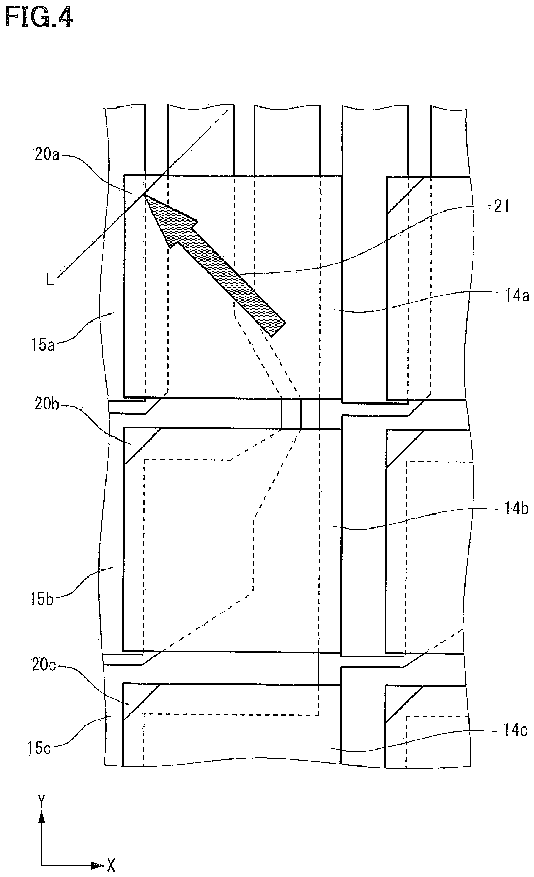

The plurality of pixel electrodes 14 (14a, 14b, 14c) is provided on one surface side of the lower substrate 12 and on the upper side of the insulating layer 17. These pixel electrodes 14 (14a, 14b, 14c) are configured, for example, by suitably patterning a transparent conductive films made of indium tin oxide (ITO) or the like. As shown in FIG.4, each pixel electrode 14 has, for example, a rectangular outer edge shape in a plan view, and is arranged in a matrix along the x direction and the y direction. A gap is provided between each pixel electrode 14. Each of the regions where the common electrode 13 and each pixel electrode 14 overlap constitutes the above-described pixel region (light modulation region).

The plurality of inter-pixel electrodes 15 (15a, 15b, 15c) is provided on one surface side of the lower substrate 12 and on the lower layer side of the insulating layer 17. These inter-pixel electrodes 15 (15a, 15b, 15c) are configured, for example, by suitably patterning a transparent conductive films made of indium tin oxide (ITO) or the like. As shown in FIG.4, for example, each of the inter-pixel electrode 15 (15a, 15b, 15c) has a rectangular outer edge shape in a plan view and overlaps the gap between the two pixel electrodes 14 (14a, 14b, 14c) adjacent to each other in the x direction in the figure.

The plurality of wiring parts 16 (16a, 16b, 16C) is provided on one surface side of the lower substrate 12 and on the lower layer side of the insulating layer 17. These wiring parts 16 (16a, 16b, 16C) are configured, for example, by suitably patterning a transparent conductive films made of indium tin oxide (ITO) or the like. A voltage is applied from the liquid crystal driving device 4 to each of the pixel electrodes 14 (14a, 14b, 14c) via each of the wiring parts 16 (16a, 16b, 16C).

The insulating layer 17 is provided on one surface side of the lower substrate 12 so as to cover the upper side of the inter-pixel electrodes 15 (15a, 15b, 15c) and the wiring parts 16 (16a, 16b, 16C). The insulating layer 17 is, for example, a $SiO_2$ film or a SiON film and can be formed by a gas phase process such as a sputtering method or a solution process. An organic insulating film may also be used for the insulating layer 17.

The liquid crystal layer 18 is provided between the upper substrate 11 and the lower substrate 12. In the present embodiment, the liquid crystal layer 18 is formed using a nematic liquid crystal material having a negative dielectric anisotropy $\Delta\varepsilon$, including a chiral material and having fluidity. In the liquid crystal layer 18 of this embodiment, the alignment of the liquid crystal molecules when no voltage is applied is in a state inclined in one direction, and has a pretilt angle within the range of 88° or more and less than 90° with respect to each substrate surface and are set to be substantially vertically aligned, for example.

As described above, an alignment film is provided on one surface side of the upper substrate 11 and the lower substrate 12, respectively. As each of the alignment films, a vertical alignment film that regulates the alignment of the liquid crystal layer 18 vertically is used. Each alignment film is subjected to a uniaxial alignment treatment such as a rubbing treatment and has a uniaxial alignment regulating force that regulates the alignment of the liquid crystal molecules of the liquid crystal layer 18 in one direction. The alignment treatment direction of the respective alignment films is set so as to be staggered (anti-parallel), for example.

The liquid crystal element 5 of the present embodiment has several tens of pixel regions to several hundreds of pixel regions defined as regions where the common electrode 13 and each pixel electrode 14 (14a, 14b, 14c) overlap in plan view, and these pixel regions are arranged in a matrix. In this embodiment, although the shape of each pixel region is a square, the shape of the pixel regions can be arbitrarily set, such as a mixture of rectangular shapes and squares, for example. The common electrode 13, the pixel electrodes 14 (14a, 14b, 14c), and the inter-pixel electrodes 15 (15a, 15b, 15c) are connected to the liquid crystal driving device 4 via the respective wiring parts 16 (16a, 16b, 16C), etc., and are statically driven.

Referring again to FIG.3, the structure of each pixel electrode 14 (14a, 14b, 14c), each inter-pixel electrode 15 (15a, 15b, 15c), and each wiring part 16 (16a, 16b, 16C) will be described in detail. In the present embodiment, the pixel electrodes 14 (14a, 14b, 14c) are arranged in three rows along the y direction (the vertical direction), and arbitrary numbers of the pixel electrodes 14 (14a, 14b, 14c) are arranged along the x direction (the horizontal direction). Here, with respect to each pixel electrode 14 (14a, 14b, 14c), in order from the top in the figure, the pixel electrode in the first row is referred to as pixel electrode 14a, the pixel electrode in the second row is referred to as pixel electrode 14b, and the pixel electrode in the third row is referred to as pixel electrode 14c. Further, with respect to the inter-pixel electrode 15 (15a, 15b, 15c), the one corresponding to the pixel electrode 14a in the first row is referred to as inter-pixel electrode 15a, the one corresponding to the pixel electrode 14b in the second row is referred to as inter-pixel electrode 15b, and the one corresponding to the pixel electrode 14c in the third row is referred to as inter-pixel electrode 15c. Further, with respect to the wiring part 16 (16a, 16b, 16C), the one corresponding to the pixel electrode 14a and the inter-pixel electrode 15a in the first row is referred to as the wiring part 16a, the one corresponding to the pixel electrode 14b and the inter-pixel electrode 15b in the second row is referred to as the wiring part 16b, and the one corresponding to the pixel electrode 14c and the inter-pixel electrode 15c in the third row is referred to as the wiring part 16c.

Each pixel electrode 14a is connected to the inter-pixel electrode 15a and the wiring part 16a on the lower layer side via a through hole 19 provided in the insulating layer 17. Thus, the pixel electrode 14a, the inter-pixel electrode 15a, and the wiring part 16a have the same electrical potential. Each through hole 19 has a substantially triangular outer edge shape in plan view, and corresponds to one of the four corners (top left corner in the figure) of each pixel electrode 14a. And each pixel electrode 14a has a connecting part 20a formed along the wall surface of the through hole 19. The connecting part 20a is connected to the inter-pixel electrode 15a and the portion of the wiring part 16a exposed at the bottom of the through hole 19 on the lower layer side.

Similarly, each pixel electrode 14b has a connecting part 20b formed along the wall surface of the through hole 19, and is connected to the inter-pixel electrode 15b and the wiring part 16b on the lower layer side. Thus, the pixel electrode 14b, the inter-pixel electrode 15b, and the wiring part 16b have the same electrical potential. Similarly, each pixel electrode 14c has a connecting part 20c formed along the wall surface of the through hole 19, and is connected to the inter-pixel electrode 15c and the wiring part 16c on the lower layer side. Thus, the pixel electrode 14c, the inter-pixel electrode 15c, and the wiring part 16c have the same electrical potential.

Each of the inter-pixel electrodes 15a is disposed, in plan view, so as to fill the space between the two adjacent pixel electrodes 14a in the x direction. In the present embodiment, each of the inter-pixel electrodes 15a is disposed so that its own left outer edge in plan view and the right outer edge of the pixel electrode 14a arranged on the left side thereof are substantially at the same position in the vertical direction.

Further, each of the inter-pixel electrodes 15a is disposed, in plan view, so that a partial region (first region) 115a located inward from its own right edge partly overlaps with a part of the region in the vicinity of the left outer edge of the pixel electrode 14a arranged on the right side thereof. In these partial regions 115a, an oblique electric field is prevented from occurring in the vicinity of the left outer edge of the pixel electrode 14a in the figure thereby achieving the effect of suppressing the occurrence of dark region. Thus, it is preferable that the length of each partial region 115a in the y direction is set as large as possible, and thus, in the present embodiment, the length of the partial region 115a in the y direction is set to be substantially the same as the length of the corresponding pixel electrode 14a in the y direction.

Similarly, each of the inter-pixel electrodes 15b is disposed, in plan view, between two adjacent pixel electrodes 14b arranged in the x direction, and a partial region (first region) 115b partially overlaps with the pixel electrode 14b on the right side thereof. Similarly, each of the inter-pixel electrodes 15c is disposed, in plan view, between two adjacent pixel electrodes 14c arranged in the x direction, and a partial region (first region) 115c partially overlaps with the pixel electrode 14c on the right side thereof.

Here, in the figure, the lower end portions of the inter-pixel electrodes 15a, 15b, 15c are drawn so as to protrude slightly downward from the lower end portions of the respective pixel electrodes 14a, 14b, 14c, but the lower end portions may actually be aligned.

Each wiring part 16a is connected to one of the inter-pixel electrodes 15a and extends upward in the figure. In the present embodiment, each wiring part 16a is integrally formed with the corresponding inter-pixel electrode 15a sharing the same width. Each wiring part 16a is connected to the liquid crystal driving device 4.

Each wiring part 16b is connected to one of the inter-pixel electrodes 15b and extends upward in the figure. Each wiring part 16b is connected to the liquid crystal driving device 4. In the present embodiment, each wiring part 16b has, in plan view, (i) a partial region (second region) 116b partially overlapping the pixel electrode 14b adjacent in the x direction with respect to the inter-pixel electrode 15b connected to the wiring part 16b, (ii) a partial region (third region) 216b disposed between the pixel electrode 14b and the pixel electrode 14a adjacent thereto in the y direction, and (iii) a partial region 316b overlapping with the pixel electrode 14a. The partial regions 116b, 216b, 316b are integrally formed.

Each partial region 116b of each wiring part 16b has an effect of suppressing the occurrence of a dark region near the upper outer edge of the pixel electrode 14b in the figure, similar to the partial region 115b described above. Thus, it is preferable that the width of each partial region 116b in the x direction is set as wide as possible, and it is preferable to have a width of 50% or more with respect to the width of the corresponding pixel electrodes 14a or 14b, for example. In the illustrated example, the width of each partial region 216b is about 70% of the width of the corresponding pixel electrodes 14a or 14b.

Each partial region 216b of each wiring part 16b also functions as an inter-pixel electrode arranged between the two adjacent pixel electrodes 14a and 14b in the y direction. Thus, it is preferable that the x direction length of each partial region 216b is set as wide as possible, and it is preferable to have a length of 50% or more with respect to the length of the corresponding pixel electrodes 14a or 14b in the x direction, for example. In the illustrated example, the width of each partial region 216b is about 70% of the length of the corresponding pixel electrodes 14a or 14b in the x direction. By providing such a partial region 216b, it is possible to broaden a region substantially functioning as a pixel region.

Each wiring part 16c is connected to one of the inter-pixel electrodes 15c and extends upward in the figure. Each wiring part 16c is connected to the liquid crystal driving device 4. In the present embodiment, each wiring part 16c has, in plan view, (i) a partial region (a second region) 116c partially overlapping the pixel electrode 14c adjacent in the x direction with respect to the inter-pixel electrode 15c connected to the wiring part 16c, (ii) a partial region (a third region) 216c disposed between the pixel electrode 14c and the pixel electrode 14b adjacent thereto in the y direction, (iii) a partial region 316c disposed to overlap with the pixel electrode 14b and interposing the insulating layer 17 therebetween, (iv) a partial region 416c disposed to overlap with the pixel electrode 14a adjacent to the pixel electrode 14b in the y direction and interposing the insulating layer 17 therebetween, and (v) a connection region 516c connecting the partial region 316c and the partial region 416c disposed between the pixel electrode 14a and the pixel electrode 14b. The partial regions 116c, 216c, 316c, 416c, and the connection region 516c are integrally formed.

Each partial region 116c of each wiring part 16c has an effect of suppressing the occurrence of a dark region near the upper outer edge of the pixel electrode 14c in the figure, similar to the partial region 115c described above. Thus, it is preferable that the length of each partial region 116c in the x direction is set as wide as possible, and for example, it is preferable to have a length of 50% or more with respect to the length of the corresponding pixel electrodes 14b or 14c in the x direction. In the illustrated example, the length of each partial region 116c is about 87% of the length of the corresponding pixel electrodes 14b or 14c in the x direction.

Each partial region 216c of each wiring part 16c also functions as an inter-pixel electrode arranged between the two adjacent pixel electrodes 14b and 14c in the y direction. Thus, it is preferable that the length of each partial region 216c in the x direction is set as wide as possible, and it is preferable to have a length of 50% or more with respect to the length of the corresponding pixel electrodes 14b or 14c in the x direction, for example. In the illustrated example, the length of each partial region 216c is about 87% of the length of the corresponding pixel electrodes 14b or 14c in the x direction. By providing such a partial region 216c, it is possible to widen a region that substantially functions as a pixel region.

FIG.4 is a diagram for explaining the relationship between the shape of the connecting part of each pixel electrode and the direction of alignment treatment. Similar to FIG.3, in FIG.4, each pixel electrode, etc. is shown in a plan view. Here, the alignment treatment is defined as a treatment (uniaxial alignment treatment) for imparting an alignment regulating force (uniaxial alignment regulating force) in one direction to an alignment film, such as a rubbing treatment or a photo aligning treatment. And the direction of alignment treatment is defined as the direction at the time of performing the above-described alignment treatment, and in general, coincides with the direction in which the uniaxial alignment regulating force is generated. As described above, the through hole 19 in which the connecting part 20a of each pixel electrode 14a is provided has a substantially triangular outer edge. In the present embodiment, the direction L of the outer edge of the connecting part 20a disposed to intersect with both the left outer edge and the upper outer edge of the pixel electrode 14a forms an angle of approximately 45 degrees with respect to both the x and y directions. The direction of alignment treatment 21 intersects (substantially orthogonal in the present embodiment) with the direction L of the outer edge, and is set from the inside of the pixel electrode 14a toward the outer edge of the connecting part 20a. Here, the relationship between each of the connecting parts 20b, 20c of each of the pixel electrode 14b, 14c and the direction of alignment treatment 21 is the same as above. The reason why it is preferable to set the direction of alignment treatment 21 as such will now be described.

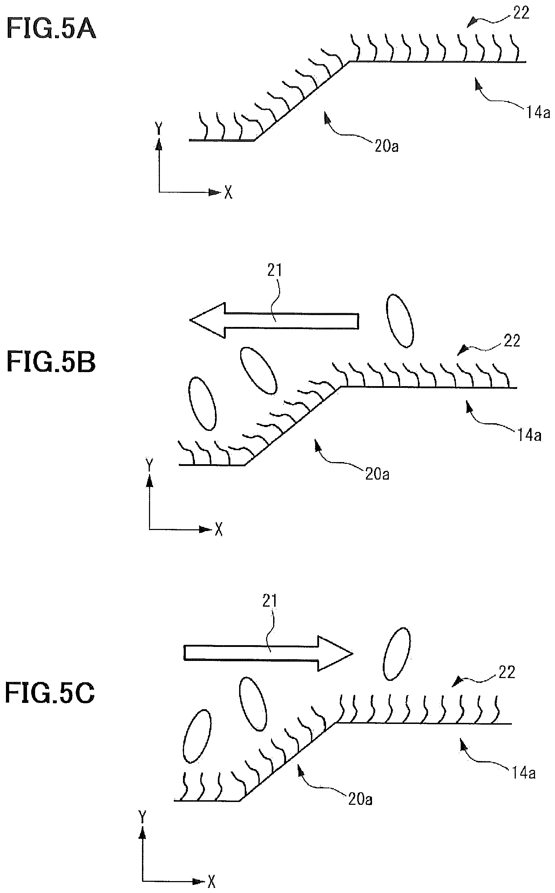

FIGS.5A to 5C are diagrams for explaining the relationship between each connecting part and the direction of alignment treatment. The state of the alignment film on the connecting part of each pixel electrode and the surface in the vicinity thereof is schematically shown. FIG.5A shows a state before the alignment treatment is being performed. As shown in the figure, in the connecting part 20a and the vicinity thereof, for example, side chain 22 of the alignment film rises upward from the surface. At this time, since the rising direction of the side chain 22 changes according to the surface configuration, the side chain 22 rises upward from the sloped surface area along the through hole 19 of the connecting part 20a.

FIG.5B shows the state of the alignment film when alignment treatment (rubbing treatment) is performed by setting the direction of alignment treatment 21 to the preferable state as shown in FIG.4. In this case, since the alignment treatment is performed in the direction from the right to the left in the figure, the side chain 22 also tilts somewhat in that direction. Here, when viewing the y direction in the figure as the reference direction (the vertical direction), since the side chain 22 is inclined to the left side in the figure throughout the whole region, the alignment direction of the liquid layer molecules controlled by the side chain 22 is also inclined to the left side in the figure. Thus, occurrence of a disclination line in the vicinity of the connecting part 20a can be prevented.

FIG.5C is a comparative example showing the state of the alignment film when alignment treatment (rubbing treatment) is performed by setting the direction of alignment treatment 21 in the direction opposite to the preferable state shown in FIG.4. In this case, since the alignment treatment is performed in the direction from the left to the right in the figure, the side chain 22 also tilts somewhat in that direction. Here, when viewing the y direction in the figure as the reference direction (the vertical direction), the side chain 22 is inclined to the right in the figure in the flat surface portion of the pixel electrode 14a, whereas in the sloped surface portion of the connecting part 20a, the side chain remains inclined to the left side in the figure. Thus, the alignment direction of the liquid crystal molecules is reversed in the vicinity of the connecting part 20a and its periphery, and a disclination line is formed at the boundary. The occurrence of such a disclination line leads to deterioration of the quality of the formed light distribution pattern.

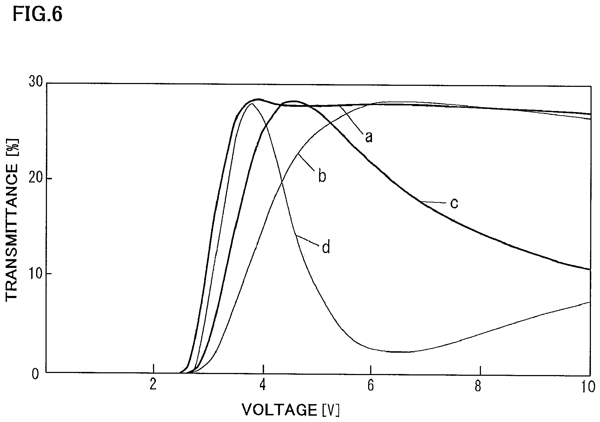

FIG.6 is a graph showing the transmittance characteristics of several samples of the liquid crystal element. Here, the transmittance characteristics of several samples of the liquid crystal elements were measured where various conditions other than the cell thickness and the presence or absence of the addition of chiral material to the liquid material were made common. And the pair of polarizers were arranged and prepared as described above. Regarding the vertical alignment film, one having a rigid skeleton (liquid crystal type) in its side chain was used where the thickness was made to about 500 to 800Å by flexographic printing, and baked at 160 to 250 degree Celsius for 1 to 1.5 hours. Regarding rubbing treatment, the indentation amount was set to 0.3 to 0.8 mm and the direction was set to anti-parallel. Regarding the liquid crystal material, one having a dielectric anisotropy $\Delta\varepsilon$ of -4.4 and a refractive index anisotropy $\Delta$n of approximately 0.13 was used.

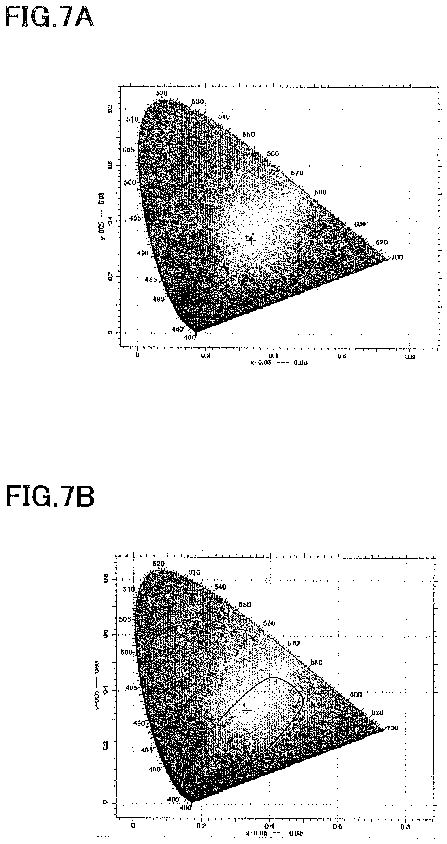

In FIG. 6, (a) characteristic line a indicates the characteristic of a liquid crystal element where the cell thickness is 6 $\mu$m and chiral material is added (hereinafter referred to as element a), (b) characteristic line b indicates the characteristic of a liquid crystal element where the cell thickness is 3 $\mu$m and chiral material is not added (hereinafter referred to as element b), (c) characteristic line c indicates the characteristic of a liquid crystal element where the cell thickness is 4 $\mu$m and chiral material is not added (hereinafter referred to as element c), and (d) characteristic line d indicates the characteristic of a liquid crystal element where the cell thickness is 6 $\mu$m and chiral material is not added (hereinafter referred to as element d). In element a and element b, the transmittance does not decrease and is substantially constant even when the applied voltage becomes high. On the other hand, in element c, the transmittance once increased as the applied voltage increases gradually decreases as the applied voltage further increases. Further, in element d, the transmittance is saturated at an applied voltage of about 3.8V, and the transmittance rapidly decreases as the voltage becomes higher than 3.8V. FIGS.7A and 7B are diagrams showing changes in chromaticity of element a and element d, respectively. In element a, the chromaticity hardly changes irrespective of the voltage change, but in element d, the chromaticity changes largely. Here, element b also had a similar result as element a.

Here, in the liquid crystal element 5 of the present embodiment, the region in which voltage is applied from the respective pixel electrodes 14 (14a, 14b, 14c) to the liquid crystal layer 18 is defined as the "first region", and the region in which voltage is applied from the inter-pixel electrode 15 to the liquid crystal layer 18 is defined as the "second region". And the effective voltage applied to the liquid crystal layer 18 from the first region and the effective voltage applied to the liquid crystal layer 18 from the second region are different from each other. This is due to the difference in the presence or absence of the insulating layer 17. That is, in the second region, since the insulating layer 17 is interposed between the inter-pixel electrode 15 and the liquid crystal layer 18, the applied voltage is divided by the insulating layer 17 and the liquid crystal layer 18. Thus, as for the liquid crystal element 5, it is desirable to use element a or element b shown in FIG.6 where the range in which the transmittance can be regarded as substantially constant with respect to the applied voltage is wider, and to set a relatively high applied voltage (for example, a voltage 1.5 times or more than a threshold value). Thereby, a necessary and sufficient voltage is applied to both the first region and the second region. The phrase "range in which the transmittance can be regarded as substantially constant" as referred to herein means a range where the transmittance variation falls within $\pm$ 3%, for example. Thereby, it is possible to reduce G value which is the index indicating the gradient of the bright/dark boundary line (light intensity change).

Here, the G value is defined by the following equation (refer to JP 2017-206094 A).

$$G = \mathrm{Log}\ (E_\beta - E_{\beta+0.1°})$$

Here, $E_\beta$ is the light intensity value at the angular position $\beta$.

The G value, in the case of the prior art for example, is about 5.7 (when the distance between the pixel electrodes is 20 $\mu$m), but in the present embodiment, the G value can be made smaller. The G value is preferably 1 or less.

The difference in the effective applied voltages between the above-described first region and the second region will now be examined. The second region can be regarded as connecting the capacitance component of the liquid crystal layer 18 and the capacitance component of the insulating layer 17 in series. That is, the second region can be regarded as a series connection of two capacitors.

The capacitance component $C_{LC}$ of the liquid crystal layer 18 can be expressed as follows, where the dielectric constant (short axis direction) of the liquid crystal material is defined as $\varepsilon_{LC}$, the area of the region is defined as S, and the layer thickness of the liquid crystal layer 18 is defined as $d_{LC}$. Likewise, the capacitance component $C_{top}$ of the insulating layer 17 can be expressed as follows, where the dielectric constant of the insulating layer 17 is defined as $\varepsilon_{top}$, the area of the region is defined as S, and the layer thickness of the insulating layer 17 is defined as $d_{top}$.

$$C_{LC} = \varepsilon_{LC} \times S\ /\ d_{LC}$$

$$C_{top} = \varepsilon_{top} \times S\ /\ d_{top}$$

Since the capacitors are connected in series and the electric charge amount Q is the same between the two, the electric charge amount Q can be expressed as follows, where the voltage applied to the liquid crystal layer 18 is defined as $V_{LC}$ and the voltage applied to the insulating layer 17 is defined as $V_{top}$.

$$Q = C_{LC} \times V_{LC}$$

$$Q = C_{top} \times V_{top}$$

For example, in a liquid crystal element having a cell thickness of 6 $\mu$m, when $d_{LC}$ and $\varepsilon_{LC}$ of the liquid crystal layer 18 are 5 $\mu$m and 8.0, respectively, and $d_{top}$ and $\varepsilon_{top}$ of the insulating layer 17 are 1 $\mu$m and 3.44, respectively, each capacitance component is expressed as follows.

$$C_{LC} = 8.0 \times S\ /\ 5 = 1.6 \times S$$

$$C_{top} = 3.44 \times S\ /\ 1 = 3.44 \times S$$

Then, the following is derived.

$$V_{LC} : V_{top} = 1 / C_{LC} : 1 / C_{top} = 1 / 1.6 : 1 / 3.44$$

Further, the following is derived.

$$V_{LC} : V_{top} = 1.96 : 1$$

From the above numerical example, the divided voltage ratio of the liquid crystal layer 18 and the insulating layer 17 is 1.96 : 1 which is approximately 2 : 1. That is, since the insulating layer 17 does not exist in the first region where the voltage is applied to the liquid crystal layer 18 from each pixel electrode 14, the applied voltage basically remains unchanged. However, in the second region where the voltage is applied from the inter-pixel electrode 15, the voltage obtained by dividing the applied voltage by 2 : 1 is applied to the liquid crystal layer 18. Therefore, in order to prevent a difference in transmittance between the first region and the second region, as described above, it is desirable to use a liquid crystal element having a wide range in which the transmittance can be regarded as substantially constant for the liquid crystal element 5, and to apply a relatively high voltage. For example, when using the liquid crystal element of the characteristic line a (element a) shown in FIG. 6, if the applied voltage is set to 7 V, then 7 V is applied to the first region of the liquid crystal layer 18 and the divided voltage of about 4.7 V is applied to the second region, thereby similar transmittance can be obtained in both regions.

In other words, it is preferable to configure the liquid crystal element 5 so as to have a transmittance characteristic such that the transmittance due to the voltage divided by the insulating layer 17 and applied to the liquid crystal layer 18 and the transmittance due to the voltage without being divided by the insulating layer 17 and applied to the liquid crystal layer 18 are substantially equal (within a variation range of $\pm$ 3%, for example).

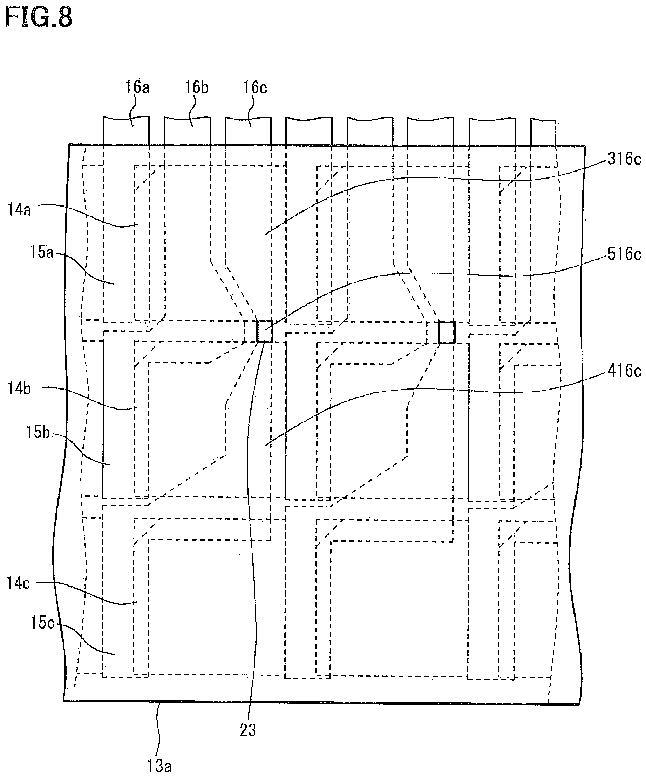

FIG.8 is a plan view for explaining a modification example of the common electrode. In FIG.8, the common electrode 13 is superimposed on each of the pixel electrodes 14a, etc. In the illustrated common electrode 13a, openings 23 are provided in regions corresponding to the connection regions 516c of the respective wiring parts 16c. Although it is preferable that the shape and size of the opening 23 in plan view be substantially similar to that of the connection region 516c, in consideration of manufacturing accuracy limitation and to allow some margin for positioning, the opening 23 may be made somewhat larger than the connection region 5 16c so that the connection region 516c is internally included in the opening 23 in plan view. By providing such openings 23, unnecessary light transmission in the connection regions 516c can be prevented.

Specifically, if each of the openings 23 is not provided, when voltage is applied to the pixel electrode 14c and the region is brought into a light transmitting state, since the same voltage is also applied to each of the connecting regions 516c, each of the connecting regions 516c also becomes a light transmitting state. Here, if each region corresponding to the pixel electrode 14a and the pixel electrode 14b is in a non-transmissive state (or a low transmissive state), then it is conceived that the light transmitting state of each of the connecting regions 516c can be visually recognized as a bright spot. Therefore, by providing the openings 23, occurrence of such bright spot can be avoided. Now, since the connection regions 516c are constantly in the non-transmissive state, each of the regions can be visually recognized as a black spot, but since a black spot is less conspicuous than a bright spot considering the characteristics of human eyes, it can be said that having black spots is more preferable than having bright spots. Further, as shown in the figure, since each connection region 516c exists for the purpose of electrically connecting the partial region 316c and the partial region 416c, it can be formed in a relatively small size. Therefore, it is possible to make the black spots hardly visible.

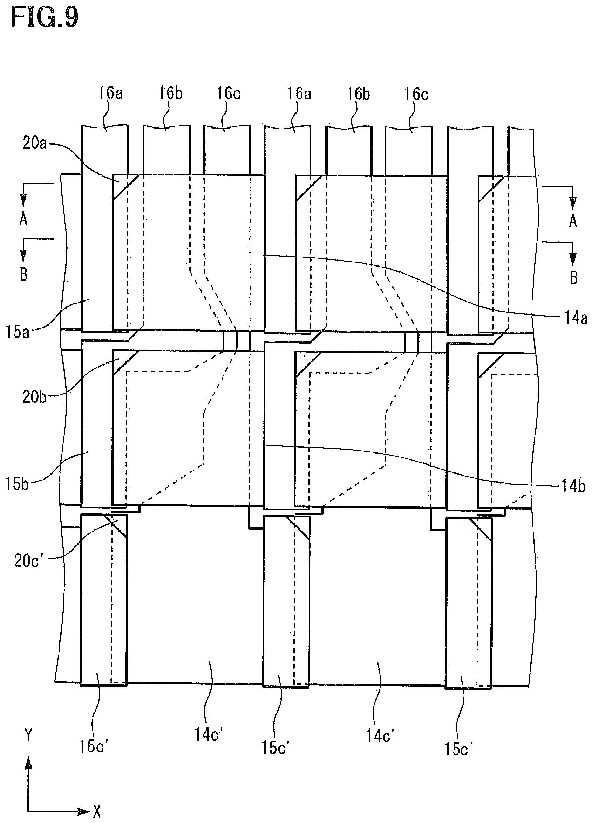

FIG.9 is a plan view for explaining a modified embodiment of the pixel electrodes and the inter-pixel electrodes. In the illustrated example, in the third row, the vertical arrangement of the pixel electrodes and the inter-pixel electrodes is inverted, which is different from the above-described embodiment. Specifically, the pixel electrodes 14c' are provided on the lower layer side and the insulating layer 17 (refer to FIGS.2A and 2B) is provided so as to cover them, and the inter-pixel electrodes 15c' are provided on the upper side of the insulating layer 17. Each inter-pixel electrode 15c' is provided with a connecting part 20c', and each inter-pixel electrode 15c' and each pixel electrode 14c' are connected via the connecting part 20c'. Each wiring part 16c is connected to each pixel electrode 14c'. As in this example, it is possible to invert the vertical arrangement of the pixel electrodes and the inter-pixel electrodes.

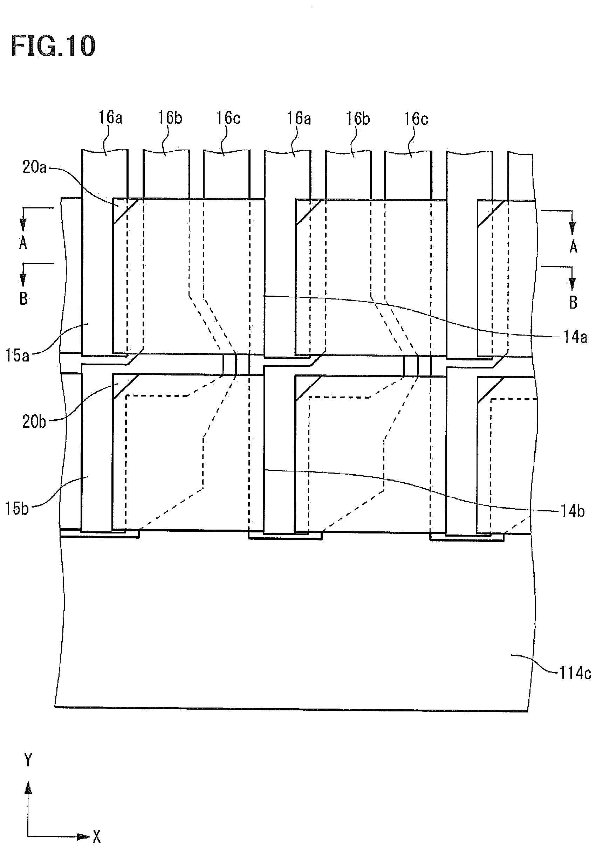

FIG.10 is a plan view for explaining a modified embodiment of the pixel electrodes. In the illustrated example, in the third row, the pixel electrodes 114c are all integrated and provided below the insulating layer 17 which is different from the above-described embodiment. As in this example, a part of pixel electrodes may be integrated with the other. Here, although the illustrated example provides a plurality of wiring parts 16c, a minimum of one wiring part 16c connected to the pixel electrode 114c may be sufficient. Then, the region capable of functioning as a pixel region can be further expanded.

According to each of the embodiments as described above, it is possible to improve the appearance of a light distribution pattern in a vehicular lamp system that controls the light distribution pattern using liquid crystal elements or the like.

It should be noted that this invention is not limited to the subject matter of the foregoing embodiment, and can be implemented by being variously modified within the scope of the present invention as defined by the appended claims. For example, in the above-described embodiments, the liquid crystal layer of the liquid crystal element is described as being vertically aligned, but the configuration of the liquid crystal layer is not limited thereto, and other structures (for example, TN alignment) may be implemented. Further, a viewing angle compensating plate may be disposed between the liquid crystal element and the polarizer.

Further, the above-described embodiments refer to applying the present invention to a system that selectively irradiates light to the forward direction of a vehicle, but the scope of the present invention is not limited thereto. For example, the present invention may be applied to a system that irradiates light to the obliquely forward direction of the vehicle according to the traveling direction of the vehicle, or a system that adjusts the optical axis of the headlamp according to the inclination in the longitudinal direction of the vehicle, or a system that electronically adjusts the high beam and the low beam of the headlamp or the like. Furthermore, the present invention may be applied not only to vehicular applications but also to lighting apparatus in general.

**Claims**

1. A liquid crystal element (5) comprising:

   a first substrate (11) and a second substrate (12) disposed facing each other;
   a liquid crystal layer (18) disposed between the first substrate (11) and the second substrate(12);
   a counter electrode (13) provided on the surface of the first substrate (11) which faces the liquid crystal layer (18);
   a plurality of pixel electrodes (14, 14a, 14b, 14c) which is arranged on the second substrate (12) along a first direction and a second direction intersecting the first direction in plan view; and
   a plurality of wiring parts (16, 16a, 16b, 16c) provided on the surface of the second substrate (12) which faces the liquid crystal layer (18);
   **characterized in that** a plurality of inter-pixel electrodes (15, 15a, 15b, 15c) is provided on the surface of the second substrate (12) which faces the liquid crystal layer (18);
   an insulating layer (17) is provided above the plurality of inter-pixel electrodes (15, 15a, 15b, 15c) and the plurality of wiring parts (16, 16a, 16b, 16c); and the plurality of pixel electrodes (14, 14a, 14b, 14c) is provided above the insulating layer (17);
   wherein each of the plurality of inter-pixel electrodes (15, 15a, 15b, 15c) is arranged, in plan view, so as to at least be overlapped by a gap between the two pixel electrodes (14, 14a, 14b, 14c) adjacent to each other in the first direction among the plurality of pixel electrodes (14, 14a, 14b, 14c), and is connected to one of the two pixel electrodes (14, 14a, 14b, 14c) through a through hole (19) provided in the insulating layer (17); and further wherein
   each of the wiring parts (16, 16a, 16b, 16c) is connected to one of the plurality of inter-pixel electrodes (15, 15a, 15b, 15c) and is arranged below the insulating layer (17) and the plurality of pixel electrodes (14, 14a, 14b, 14c).

2. The liquid crystal element according to claim 1,
   wherein each of the plurality of inter-pixel electrodes (15, 15a, 15b, 15c) has a first region (115a, 115b, 115c) overlapped by a portion of the respective pixel electrode (14, 14a, 14b, 14c) in the vicinity of the outer edge of that pixel electrode (14, 14a, 14b, 14c), that portion being connected to the inter-pixel electrode (15, 15a, 15b, 15c), in plan view.

3. The liquid crystal element according to claim 1 or claim 2 wherein:

   the pixel electrodes (14, 14a, 14b, 14c) and the inter-pixel electrodes (15, 15a, 15b, 15c) have a rectangular shape;
   the pixel electrodes (14, 14a, 14b, 14c) are arranged in a matrix of three rows, each row extending along the first direction, and in an arbitrary number of columns, each column extending along the second direction, the first and second directions being orthogonal to each other;
   each column of pixel electrodes (14) comprises a first pixel electrode (14a) in the first row, a second pixel electrode (14b) in the second row arranged below the first row in plan view and a third pixel electrode (14c) in the third row arranged below the second row in plan view;
   the inter-pixel electrodes (15) corresponding to the pixel electrodes (14) in each column comprise a first inter-pixel electrode (15a) corresponding to the first pixel electrode (14a), a second inter-pixel electrode (15b) corresponding to the second pixel electrode (14b) and a third inter-pixel electrode (15c) corresponding to the third pixel electrode (15a);

the wiring parts (16) arranged below each column of pixel electrodes (14) extend in the second direction and comprise a first wiring part (16a) corresponding to the first pixel electrode (14a) and the first inter-pixel electrode (15a), a second wiring part (16b) corresponding to the second pixel electrode (14b) and the second inter-pixel electrode (15b) and a third wiring part (16c) corresponding to the third pixel electrode (14c) and the third inter-pixel electrode (15c);

wherein each of the second wiring parts (16b) and the third wiring parts (16c) has a second region (116b, 116c) overlapped by a second portion of the region in the vicinity of the outer edge of the respective pixel electrode (14b, 14c) connected via the respective wiring part (16b, 16c) and the respective inter-pixel electrode (15b, 15c), in plan view.

4. The liquid crystal element according to claim 3, wherein each of the second wiring parts (16b) and the third wiring parts (16c) has a third region (216b, 216c) overlapped by a gap between the second and the third pixel electrodes (14b, 14c) adjacent to each other in each column, in plan view.

5. The liquid crystal element according to claims 3 or 4, wherein each of the third wiring parts (16c) has a connection region (516c) extended between the second and the third pixel electrodes (14b, 14c) adjacent to each other in each column, in plan view, and wherein the counter electrode (13a) has a plurality of openings (23) overlapping with each of the connection regions (516c), in plan view.

6. The liquid crystal element according to any one of claims 1 to 5,
wherein the through hole (19) provided in the insulating layer (17) has an outer edge which obliquely intersects with each of two immediately adjacent outer edges of the respective pixel electrode (14, 14a, 14b, 14c), wherein first and second alignment films for regulating the alignment of the liquid crystal layer 18 are arranged on the first and second substrates (11, 12), respectively;

the second alignment film on the second substrate (12) has a uniaxial alignment regulating force that controls the alignment of the liquid crystal layer (18) in one direction, and

wherein the direction of the uniaxial alignment regulating force intersects with the outer edge of the through hole (19) and is further set toward the outer edge of the through hole (19).

7. A lighting apparatus capable of variably setting a light distribution pattern comprising:

the liquid crystal element (5) according to any of the preceding claims; and a light source (1);
wherein the liquid crystal element (5) is suitable for forming an image corresponding to the light distribution pattern of the light source (1); and
wherein the lighting apparatus further comprises an optical system (7) for projecting the image formed by the liquid crystal element (5). J

**Patentansprüche**

1. Flüssigkristallelement (5), das Folgendes aufweist:

ein erstes Substrat (11) und ein zweites Substrat (12), die zueinander hinweisend angeordnet sind;
eine Flüssigkristallschicht (18), die zwischen dem ersten Substrat (11) und dem zweiten Substrat (12) angeordnet ist,
eine Gegenelektrode (13), die an der Oberfläche des ersten Substrates (11) vorgesehen ist, die zu der Flüssigkristallschicht (18) weist;
eine Vielzahl von Pixelelektroden (14, 14a, 14b, 14c), die auf dem zweiten Substrat (12) entlang einer ersten Richtung und einer zweiten Richtung angeordnet ist, welche die erste Richtung in einer Draufsicht schneidet; und
eine Vielzahl von Verdrahtungsteilen (16, 16a, 16b, 16c), die an der Oberfläche des zweiten Substrates (12) vorgesehen sind, die zu der Flüssigkristallschicht (18) hinweist;
**dadurch gekennzeichnet, dass**
eine Vielzahl von Zwischenpixelelektroden (15, 15a, 15b, 15c) an der Oberfläche des zweiten Substrates (12) vorgesehen ist, die zu der Flüssigkristallschicht (18) hinweist;
eine Isolierschicht (17), über der Vielzahl von Zwischenpixelelektroden (15, 15a, 15b, 15c) und der Vielzahl von Verdrahtungsteilen (16, 16a, 16b, 16c) vorgesehen ist; und

die Vielzahl von Pixelelektroden (14, 14a, 14b, 14c) über der Isolierschicht (17) vorgesehen ist;

wobei jede der Vielzahl von Zwischenpixelelektroden (15, 15a, 15b, 15c) in einer Draufsicht so angeordnet ist, dass sie zumindest durch einen Spalt zwischen den zwei Pixelelektroden (14, 14a, 14b, 14c), die in der ersten Richtung benachbart zueinander sind, aus der Vielzahl von Pixelelektroden (14, 14a, 14b, 14c) überlappt wird und mit einer der zwei Pixelelektroden (14, 14a, 14b, 14c) durch ein Durchgangsloch (19) verbunden ist, welches in der Isolierschicht (17) vorgesehen ist; und

wobei weiter jeder der Verdrahtungsteile (16, 16a, 16b, 16c) mit einer der Vielzahl von Zwischenpixelelektroden (15, 15a, 15b, 15c) verbunden ist und unter der Isolierschicht (17) und der Vielzahl von Pixelelektroden (14, 14a, 14b, 14c) angeordnet ist.

2.  Flüssigkristallelement nach Anspruch 1,

wobei jeder der Vielzahl von Zwischenpixelelektroden (15, 15a, 15b, 15c) einen ersten Bereich (115a, 115b, 115c) hat, der mit einem Teil der jeweiligen Pixelelektrode (14, 14a, 14b, 14c) in der Nachbarschaft der äußeren Kante von dieser Pixelelektrode (14, 14a, 14b, 14c) überlappt wird, wobei der Teil mit der Zwischenpixelelektrode (15, 15a, 15b, 15c) in einer Draufsicht verbunden ist.

3.  Flüssigkristallelement nach Anspruch 1 oder Anspruch 2, wobei

die Pixelelektroden (14, 14a, 14b, 14c) und die Zwischenpixelelektroden (15, 15a, 15b, 15c) eine rechteckige Form haben;

die Pixelelektroden (14, 14a, 14b, 14c) in einer Matrix von drei Zeilen angeordnet sind, wobei jede Zeile sich entlang der ersten Richtung erstreckt, und in einer beliebigen Anzahl von Spalten, wobei jede Spalte sich entlang der zweiten Richtung erstreckt, wobei die ersten und zweiten Richtungen senkrecht zueinander sind;

jede Spalte von Pixelelektroden (14) ein erste Pixelelektrode (14a) in der ersten Zeile, eine zweite Pixelelektrode (14b) in der zweiten Zeile, die unter der ersten Zeile in einer Draufsicht angeordnet ist, und eine dritte Pixelelektrode (14c) in der dritten Zeile aufweist, die in einer Draufsicht unter der zweiten Zeile angeordnet ist;

die Zwischenpixelelektroden (15) entsprechend den Pixelelektroden (14) in jeder Spalte eine erste Zwischenpixelelektrode (15a) entsprechend der ersten Pixelelektrode (14a), eine zweite Zwischenpixelelektrode (15b) entsprechend der zweiten Pixelelektrode (14b) und eine dritte Zwischenpixelelektrode (15c) entsprechend der dritten Pixelelektrode (15a) aufweisen;

die Verdrahtungsteile (16), die unter jeder Spalte von Pixelelektroden (14) angeordnet sind, sich in der zweiten Richtung erstrecken und einen ersten Verdrahtungsteil (16a) entsprechend der ersten Pixelelektrode (14a) und der ersten Zwischenpixelelektrode (15a), einen zweiten Verdrahtungsteil (16b) entsprechend der zweiten Pixelelektrode (14b) und der zweiten Zwischenpixelelektrode (15b) und einen dritten Verdrahtungsteil (16c) entsprechend der dritten Pixelelektrode (14c) und der dritten Zwischenpixelelektrode (15c) aufweisen;

wobei jeder der zweiten Verdrahtungsteile (16b) und der dritten Verdrahtungsteile (16c) einen zweiten Bereich (116b, 116c) hat, der durch den zweiten Teil des Bereichs in der Nähe der äußeren Kante der jeweiligen Pixelelektrode (14b, 14c), die über die jeweiligen Verdrahtungsteile (16b, 16c) und die jeweilige Zwischenpixelelektrode (15b, 15c) verbunden sind, in einer Draufsicht überlappt wird.

4.  Flüssigkristallelement nach Anspruch 3, wobei jeder der zweiten Verdrahtungsteile (16b) und der dritten Verdrahtungsteile (16c) einen dritten Bereich (216b, 216c) hat, der durch einen Spalt zwischen den zweiten und den dritten Pixelelektroden (14b, 14c), die in jeder Spalte benachbart zueinander sind, in einer Draufsicht überlappt wird.

5.  Flüssigkristallelement nach Anspruch 3 oder 4, wobei jeder der dritten Verdrahtungsteile (16c) einen Verbindungsbereich (516c) hat, der sich zwischen den zweiten und dritten Pixelelektroden (14b, 14c), die in jeder Spalte benachbart zueinander sind, in einer Draufsicht erstreckt, und wobei die Gegenelektrode (13a) eine Vielzahl von Öffnungen (23) hat, die mit jedem der Verbindungsbereiche (516c) in einer Draufsicht überlappt.

6.  Flüssigkristallelement nach einem der Ansprüche 1 bis 5,

wobei das Durchgangsloch (19), welches in der Isolierschicht (17) vorgesehen ist, eine äußere Kante hat, die sich schräg mit jeder von zwei direkt benachbarten äußeren Kanten der jeweiligen Pixelelektroden (14, 14a, 14b, 14c) schneidet,

wobei erste und zweite Ausrichtungsfilme zum Regeln bzw. Einstellen der Ausrichtung der Flüssigkristallschicht (18) jeweils auf den ersten und zweiten Substraten (11, 12) angeordnet sind;

wobei der zweite Ausrichtungsfilm auf dem zweiten Substrat (12) eine uniaxiale Ausrichtungsregulierungskraft hat, welche die Ausrichtung der Flüssigkristallschicht (18) in einer Richtung steuert, und

wobei die Richtung der uniaxialen Ausrichtungsregulierungskraft sich mit der äußeren Kante des Durchgangslochs (19) schneidet und weiter zu der äußeren Kante des Durchgangslochs (19) hin eingestellt ist.

7. Beleuchtungsgerät, welches fähig ist, ein Lichtverteilungsmuster in variabler Weise einzustellen, welches Folgendes aufweist:

das Flüssigkristallelement (5) gemäß einem der vorhergehenden Ansprüche; und
eine Lichtquelle (1);
wobei das Flüssigkristallelement (5) ausgebildet ist, um ein Bild entsprechend dem Bildverteilungsmuster der Lichtquelle (1) zu formen; und
wobei das Beleuchtungsgerät weiter ein optisches System (7) aufweist,
um das Bild zu projizieren, welches durch das Flüssigkristallelement (5) geformt wird.

## Revendications

1. Élément à cristaux liquides (5) comprenant :

un premier substrat (11) et un deuxième substrat (12) disposés l'un en face de l'autre ;
une couche de cristaux liquides (18) disposée entre le premier substrat (11) et le deuxième substrat (12) ;
une contre-électrode (13) prévue sur la surface du premier substrat (11) qui fait face à la couche de cristaux liquides (18) ;
une pluralité d'électrodes de pixels (14, 14a, 14b, 14c) qui est agencée sur le deuxième substrat (12) selon une première direction et une deuxième direction coupant la première direction dans une vue en plan ; et
une pluralité de parties de câblage (16, 16a, 16b, 16c) prévue sur la surface du deuxième substrat (12) qui fait face à la couche de cristaux liquides (18) ;
**caractérisé en ce que**
une pluralité d'électrodes inter-pixels (15, 15a, 15b, 15c) est prévue sur la surface du deuxième substrat (12) qui fait face à la couche de cristaux liquides (18) ;
une couche isolante (17) est prévue au-dessus de la pluralité d'électrodes inter-pixels (15, 15a, 15b, 15c) et de la pluralité de parties de câblage (16, 16a, 16b, 16c) ; et
la pluralité d'électrodes de pixels (14, 14a, 14b, 14c) est prévue au-dessus de la couche isolante (17) ;
dans lequel chaque électrode de la pluralité d'électrodes inter-pixels (15, 15a, 15b, 15c) est agencée, en vue en plan, de sorte à être au moins chevauchée par un espace entre les deux électrodes de pixels (14, 14a, 14b, 14c) adjacentes l'une à l'autre dans la première direction parmi la pluralité d'électrodes de pixel (14, 14a, 14b, 14c), et est connectée à une des deux électrodes de pixel (14, 14a, 14b, 14c) à travers un orifice traversant (19) prévu dans la couche isolante (17) ; et
dans lequel en outre chacune des parties de câblage (16, 16a, 16b, 16c) est connectée à une électrode de la pluralité d'électrodes inter-pixels (15, 15a, 15b, 15c) et est agencée sous la couche isolante (17) et la pluralité d'électrodes de pixels (14, 14a, 14b, 14c).

2. Élément à cristaux liquides selon la revendication 1,
dans lequel chaque électrode de la pluralité d'électrodes inter-pixels (15, 15a, 15b, 15c) a une première région (115, 115a, 115b, 115c) chevauchée par une partie de l'électrode de pixel respective (14, 14a, 14b, 14c) à proximité du bord extérieur de cette électrode de pixel (14, 14a, 14b, 14c), cette partie étant connectée à l'électrode inter-pixels (15, 15a, 15b, 15c), en vue en plan.

3. Élément à cristaux liquides selon la revendication 1 ou la revendication 2, dans lequel :

les électrodes de pixels (14, 14a, 14b, 14c) et les électrodes inter-pixels (15, 15a, 15b, 15c) ont une forme rectangulaire ;
les électrodes de pixels (14, 14a, 14b, 14c) sont agencées selon une matrice de trois lignes, chaque ligne s'étendant le long de la première direction, et d'un nombre arbitraire de colonnes, chaque colonne s'étendant le long de la deuxième direction, les première et deuxième directions étant orthogonales l'une à l'autre;
chaque colonne d'électrodes de pixels (14) comprend une première électrode de pixel (14a) dans la première ligne, une deuxième électrode de pixel (14b) dans la deuxième ligne agencée sous la première ligne en vue en plan et une troisième électrode de pixel (14c) dans la troisième ligne agencée sous la deuxième ligne en vue en plan ;
les électrodes inter-pixels (15) correspondant aux électrodes de pixel (14) dans chaque colonne comprennent une première électrode inter-pixel (15a) correspondant à la première électrode de pixel (14a), une deuxième électrode inter-pixel (15b) correspondant à la deuxième électrode de pixel (14b) et une troisième électrode inter-pixel (15c) correspondant à la troisième électrode de pixel (14c) ;

les parties de câblage (16) agencées sous chaque colonne d'électrodes de pixels (14) s'étendent dans la deuxième direction et comprennent une première partie de câblage (16a) correspondant à la première électrode de pixel (14a) et à la première électrode inter-pixel (15a), une deuxième partie de câblage (16b) correspondant à la deuxième électrode de pixel (14b) et à la deuxième électrode inter-pixel (15b) et une troisième partie de câblage (16c) correspondant à la troisième électrode de pixel (14c) et à la troisième électrode inter-pixel (15c) ;

dans lequel chacune des deuxièmes parties de câblage (16b) et des troisièmes parties de câblage (16c) a une deuxième région (116b, 116c) chevauchée par une deuxième partie de la région à proximité du bord extérieur de l'électrode de pixel respective (14b, 14c) connectée par l'intermédiaire de la partie de câblage respective (16b, 16c) et de l'électrode inter- pixel respective (15b, 15c), en vue en plan.

4. Élément à cristaux liquides selon la revendication 3, dans lequel chacune des deuxièmes parties de câblage (16b) et des troisièmes parties de câblage (16c) a une troisième région (216b, 216c) chevauchée par un espace entre les deuxièmes et troisièmes électrodes de pixel (14b, 14c) adjacentes l'une à l'autre dans chaque colonne, en vue en plan.

5. Elément à cristaux liquides selon la revendication 3 ou 4, dans lequel chacune des troisièmes parties de câblage (16c) a une région de connexion (516c) qui s'étend entre les deuxièmes et troisièmes électrodes de pixel (14b, 14c) adjacentes l'une à l'autre dans chaque colonne, en vue en plan, et

dans lequel la contre-électrode (13a) a une pluralité d'ouvertures (23) chevauchant chacune des régions de connexion (516c), en vue en plan.

6. Élément à cristaux liquides selon l'une quelconque des revendications 1 à 5, dans lequel l'orifice traversant (19) prévu dans la couche isolante (17) a un bord extérieur qui coupe obliquement chacun de deux bords extérieurs immédiatement adjacents de l'électrode de pixel respective (14, 14a, 14b, 14c), dans lequel des premier et deuxième films d'alignement destinés à contrôler l'alignement de la couche de cristaux liquides (18) sont agencés sur les premier et deuxième substrats (11, 12), respectivement ;

le deuxième substrat (12) a une force de régulation d'alignement uniaxiale qui commande l'alignement de la couche de cristaux liquides (18) dans une direction, et

dans lequel la direction de la force de régulation d'alignement uniaxiale croise le bord extérieur de l'orifice traversant (19) et est en outre orientée vers le bord extérieur de l'orifice traversant (19).

7. Appareil d'éclairage capable de régler de façon variable un motif de distribution de lumière comprenant :

l'élément à cristaux liquides (5) selon l'une quelconque des revendications précédentes ; et une source de lumière (1) ;

dans lequel l'élément à cristaux liquides (5) est adapté pour former une image correspondant au motif de distribution de lumière de la source de lumière (1) ; et

dans lequel l'appareil d'éclairage comprend en outre

un système optique (7) destiné à projeter l'image formée par l'élément à cristaux liquides (5).

FIG.1

## FIG.2A

5

## FIG.2B

5

EP 3 505 817 B1

# FIG.3

# FIG.4

FIG.5A

FIG.5B

FIG.5C

FIG.6

FIG.7A

FIG.7B

FIG.8

FIG.9

FIG.10

**EP 3 505 817 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005183327 A
- US 2015252974 A1
- US 2004100676 A1
- JP 2017206094 A